# EUROPEAN PATENT APPLICATION

(11) **EP 2 659 767 A1**
(43) Date of publication of application: **06.11.2013**
(21) Application number: 12166286.0
(22) Date of filing: 01.05.2012
(51) Int. Cl.: A01G 9/02, A01G 27/04

(54) **A plant pot, and a method and a system for orienting the plant pot**

(71) Applicant: Waterwick B.V., 3295 KH s'Gravendeel (NL)
(72) Inventor: Visser, Anthony, 3295 CT 's-Gravendeel (NL); Contillo, Lawrence Joseph Contillo III, Weaverville, NC 28787 (US)
(74) Representative: Grootscholten, Johannes A.M.

(57) **Abstract**

The present invention relates to a plant pot, comprising a bottom and at least one side wall, extending from the bottom up to a top rim, made from plastic, for instance in an injection of blow moulding process, and an integrated coupling part designed and adapted to be engaged for rotationally orientation of the plant pot in a system for processing the plant pot.

Furthermore, the present invention relates to a method and a system for rotationally orienting and processing a plant pot having a bottom and at least one side wall, extending from the bottom up to a top rim, and at least one integrated coupling part at the bottom of the plant pot.

## Description

The present invention generally relates to a plant pot, a method and a system to enable rotational positioning of a plant pot.

It is noted that usually plant pots are essentially rotation symmetric, in that the same shape and form result after any arbitrary rotation thereof around a central longitudinal axis thereof.

Nonetheless, sometimes a precise rotational orientation of a plant pot is desired for any operation, such as inserting a wick through a pre-existing hole in or at a bottom of the plant pot.

To the best knowledge of the present inventors, there are no viable solutions for the above disadvantages of the prior art.

However, according to the invention in a first aspect thereof, a plant pot is provided, comprising a bottom and at least one side wall, extending from the bottom up to a top rim, made from plastic, for instance in an injection of blow moulding process or a pressure moulding process, and an integrated coupling part designed and adapted to be engaged for rotation of the plant pot and oriented in a system for processing the plant pot.

Preferably, the plant pot exhibits the features of at least one hole, which is arranged in or at least near the bottom for a wick to be inserted there through into the plant pot to extend from below the bottom and through the hole. The hole may be pre-arranged or drilled at the time at which inserting the wick is to be executed.

Preferably, the plant pot exhibits the features that the coupling part comprises a recess in the bottom of the plant pot.

Preferably, the plant pot exhibits the features that the coupling part in frontal view has any one or more than one shape from the group at least comprising: a star; an oval; a triangle; a pentagram; et cetera.

Preferably, the plant pot exhibits the features of a plurality of holes, wherein the holes are arranged in a predetermined configuration relative to the shape and position of the coupling part.

Preferably, the plant pot with a wick exhibits the features the wick is made from a material exhibiting a capillary action, such as a fibrous material, a woven or non-woven material, cotton, woven cotton rope, wool, acrylic string, hemp rope, synthetic shoe laces, chamois e.g. 100% rayon, polyester cord, braided polypropylene rope, nylon rope, etc.

According to the invention in a second aspect thereof a method is provided for rotationally orienting a plant pot having a bottom and at least one side wall, extending from the bottom up to a top rim, and at least one coupling part at the bottom of the plant pot, the method comprising the steps of: engaging the coupling part using a rotatable drive, such as a wheel; rotating the drive and therewith also the plant pot to a rotational position corresponding with a processing step; and executing the processing step.

Preferably, the method exhibits the features that the processing step is the application of a wick through a hole, which is pre-arranged in or at least near the bottom, the method comprising: providing a length of wick material longer than a height of the plant pot; rotating the plant pot using the drive to a rotational position wherein the hole is aligned with the wick; orienting the length of wick material towards the hole in the bottom of the plant pot; and inserting the length of wick material to extend from below the bottom and at least through the hole into the plant pot. Therein it may be beneficial if the method exhibits the features of inserting the wick through the hole at least essentially up to the top rim of the side wall.

Preferably, the method exhibits the features that the coupling part in frontal view and the rotatable drive have corresponding shapes. Therein it may be beneficial if the method exhibits the features that the shapes of the coupling part and the drive are each any one or more than one shape from the group at least comprising: a star; an oval; a triangle; a pentagram; et cetera.

Preferably, the method exhibits the features that holes are arranged at a plurality of predefined positions relative to the coupling part to enable the processing step based on a selected one of the plurality of holes to reduce an amount of rotation needed prior to executing the processing step.

According to the invention in a third aspect thereof a system is provided for rotationally orienting a plant pot having a bottom and at least one side wall, extending from the bottom up to a top rim, and at least one coupling part at the bottom of the plant pot, the system comprising: a rotatable drive, such as a wheel, to engage the coupling part, wherein by rotation of the drive the plant pot is oriented to a rotational position corresponding with a processing step; and at least an actuator to execute the processing step.

Preferably, the system exhibits the features that the processing step is the application of a wick through a hole, which is pre-arranged in or at least near the bottom, the system comprising: an inserting lance connected to the actuator to selectively insert a length of wick material into the plant pot through the hole, after rotation of the plant pot to a rotational position wherein the hole is aligned with the inserting lance carrying the wick. Such an actuator may be an electric, hydraulic or pneumatic motor, which may be selectively controlled to extend or insert the lance after the desired alignment has been achieved. Therein it may be beneficial if the system exhibits the features that the inserting lance is longer than a height of the plant pot to insert the wick through the hole at least essentially up to the top rim of the side wall. Thereby the wick will extend to above at least the soil or substrate in the plant pot, to allow - for instance - the application of in particular a label and in general an anchor to the wick, to prevent the wick from sinking back down into or through the soil or substrate towards or to the bottom of the plant pot, whereby the beneficial effects of the wick may be lost, which is therefore effectively prevented.

Preferably, the system further exhibits the features that the rotatable drive has at least one or more than one shape from the group at least comprising: a star; an oval; a triangle; a pentagram; et cetera.

The present invention will be described in further detail herein below, where reference is made to the accompanying drawings of several preferred and other embodiments, in which the same reference numbers may be used for the same or similar features of distinct embodiments, and of which it is noted that scope of protection for the invention is not to be limited to any such embodiment, but that the invention is only bound by the limitations of the accompanying claims, and then only the independent ones of these claims. In the drawings:
Fig. 1 shows a schematic side view of a plant pot and a wick to be inserted in the plant pot;
Fig. 2 shows a schematic perspective view of the plant pot of Fig. 1 after insertion of the wick;
Fig. 3 shows a schematic partially cut away view of the plant pot of Fig. 1 and Fig. 2 with additionally a label;
Fig. 4 shows a schematic partially cut away view of an alternative plant pot with an added label;
Fig. 5 shows a schematic perspective view of an alternative embodiment of a plant pot and more detailed manner of arranging the wick;
Fig. 6 shows a schematic view of an alternative embodiment relative to fig. 5 with respect to aligning and arranging a wick in the plant pot;
Fig. 7 shows a schematic view of a plant pot and container assembly in use in an ebb and flood based tray;
Fig. 8 shows a schematic top view of the plant pot and container assembly of Fig. 7;
Fig. 9 shows a schematic, partially broken away side view of the plant pot and container assembly of Fig. 7 and Fig. 8 with additionally a water level indicator;
Fig. 10 shows a schematic perspective view of a plant pot much like the one in Fig.'s 5, 8 and 9 in an accommodating tray suitable for growing, transporting and displaying for sale of plants;
Fig. 11 shows a schematic side view along arrow XI in Fig. 10;
Fig. 12 and Fig. 13 show schematic top views of plant pots in an alternative accommodating tray suitable for growing, transporting and displaying for sale of plants;
Fig. 14 shows a perspective schematic view of a stack of trays with a collapsible structure between subsequent trays in the stack, wherein the trays are suitable for at least growing plants in pots and the stack is suitable for growing, transporting and displaying for sale of plants;
Fig. 15 shows a schematic side view of a collapsible structure in a collapsed state;
Fig.'s 16 - 21 show a succession of steps and parts of a system for inserting a wick into a plant pot as depicted in Fig.'s 1, 2 and 3;
Fig. 22 shows a schematic perspective view of a system adapted to accommodate plant pots with a wick, for instance for display plants for sale;
Fig. 23 shows a cross sectional schematic side view along arrow XXIII in Fig. 22;
Fig. 24 shows a schematic perspective view of an alternative configuration relative to Fig. 23;
Fig. 25 shows a further alternative embodiment exhibiting similar features relative to trays in Fig.'s 12 and 13;
Fig. 27 shows an alternative relative to fig. 8; and
Fig. 28 shows an arrangement for di9splay for sale of plants in plant pots that can be formed from the assembly of fig.'s 14 and 15.

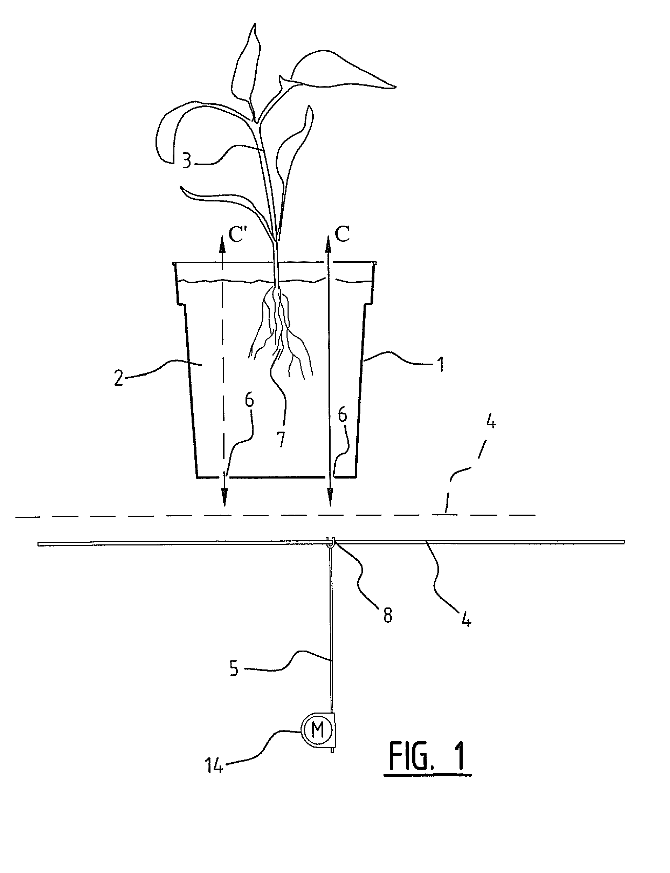

Fig. 1 shows a plant pot 1, containing soil 2 or any suitable substrate, like coco, peat, stone wool or glass wool or the like. Also in plant pot 1 a plant 3 is shown to clarify the purpose of the plant pot. However, at the stage depicted in fig. 1 more usually a plant 3 will not already be growing in the soil 2.

Namely, plant pot 1 comprises a number of bottom holes 6 in the bottom thereof. These are customary and pre-arranged or may be drilled in the plant pot 1 at a time just before inserting the wick is to be executed. For instance customary holes 6 may allow a surplus of water to be discharged from the plant pot 1, and/or roots 7 of a plant 3 may be provided with air through the bottom holes or may be allowed to grow through the holes 6 in the bottom of the plant pot. A newly drilled hole may be provided in a plant pot 1 solely for the purpose of arranging a wick 4. Notwithstanding the moment of arranging the hole 6 (during production of the plant pot 1 or later, just before inserting the wick), measures need to be taken to allow aligned inserting of the wick 4 through the hole 6.

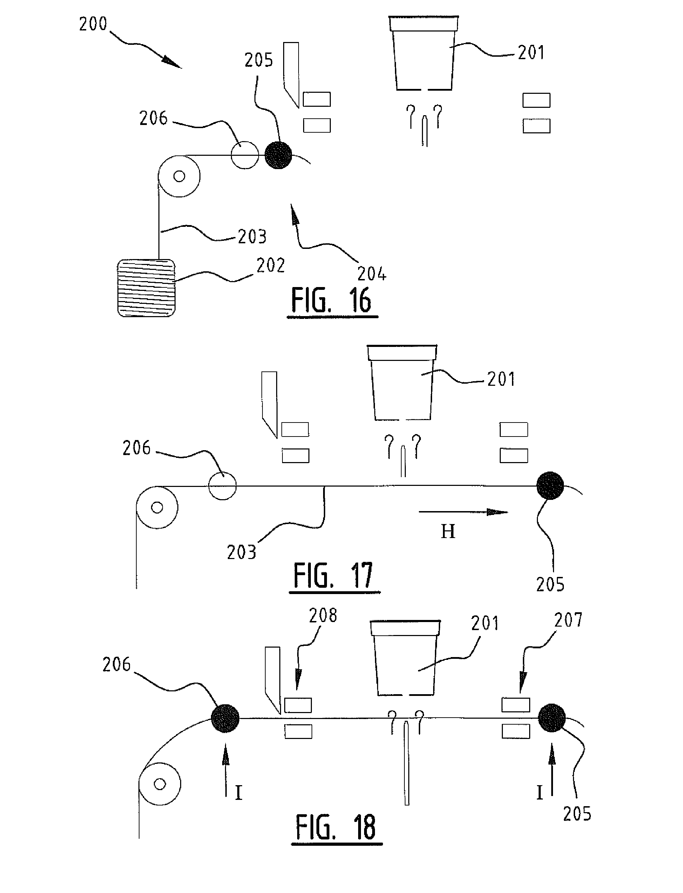

In fig. 1 an inserting lance 5 is shown, forming a part of a system for processing plant pots 1, of which in fig. 1 only the inserting lance 5 is shown in conjunction with a drive 14. The inserting lance 5 has an engaging head 8, which is hook-shaped in order to engage the wick 4. The wick 4 has a predetermined length, and the engaging head 8 is arranged to engage the wick 4 approximately midway. At this time the wick may be tensioned as shown in and described below referring to figures 16 - 21. Where in the present specification an inserting lance is referred to, this expression is intended to encompass all possible equivalents, such as a needle, a simple stick or rod, or any other elongate element capable of being aligned to a bottom hole and driven there through, and enabling that the wick is engaged and inserted though the pot's bottom hole.

The engaging head 8 is to have sufficiently small dimensions to pass the inserting lance 5 with the engaging head 8 through one of the bottom holes 6 of the plant pot 1, when the drive 14 is selectively operated or activated. In order to be driven through a selected one of the bottom holes 6 in the bottom of the plant pot 1, the inserting lance 5 with the engaging head 8 is connected to the drive 14. The drive 14 enables the inserting lance 5 with the engaging head 8 to be inserted into and withdrawn back out of the plant pot 1 through the bottom hole 6 thereof in the direction of double arrow C. Thereby, the inserting lance 5 is driven upwards, taking the wick 4 along to be extended into the soil 2 in the plant pot 1. Thereafter, the inserting lance 5 is retracted by the drive 14 in a downward direction in the schematic representation of fig. 1, leaving the wick 4 behind. The inserting speed of the inserting lance 5 may vary and depend for instance on the consistency of the soil or other substrate in the plant pot. Speeds of more than 0,5 up to 5 or 15 cm/s may be effective for inserting the wick 4 using the lance and the drive 14 thereof. For automated applications as envisaged here with the present invention, the inserting speed may vary also and depend on (must at least correspond with) the supply and throughput speed of the plant pots. Preferred inserting speeds may be approximately 2 - 10 cm/s.

The wick 4 can be made from any suitable material that can exhibit a capillary action, such as a fibrous material, a woven or non-woven material, cotton, woven cotton rope, wool, acrylic string, hemp rope, synthetic shoe laces, chamois e.g. 100% rayon, braided polypropylene rope, polyester cord, nylon rope, etc. The wick material may be synthetic and/or natural, and/or designed not to be susceptible to rotting or quite the opposite - be allowed to rot in the course of time.

It is noted here that one or more than one additional wick may be inserted into a singular plant pot 1, which is schematically represented with arrow C' and second wick 4, which is shown in a dashed line. This may especially be called for in case of larger diameter pots for relatively large plants and/or if bottom holes 6 are small in relation to a desired wick thickness, where a desired water pull up capacity may be achieved using a plurality of wicks, optionally inserted in or through one bottom hole 6 or through a plurality of separate bottom holes 6.

Bottom holes may be dimensioned to have a diameter or effective opening (for instance in case of square holes) of 0,1 cm² - 5 cm², more preferably a size between 0,2 - 4 cm² and even more preferably a size of approximately 0,3 - 3 cm². The engaging head 8 must be dimensioned to pass through the bottom holes 6, without damage to the plant pots in the vicinity of the bottom holes 6. Either the holes (when designing the plant pot to correspond with the inserting head) of the head of the inserting lance (when designing the inserting lance, for instance to be used with pots of standard sizes) or both must be made to correspond. Also, the choice of wick material must take the size of the bottom hole into account in particular since - as described below - the wick is doubled up in itself. Thus the wick may have dimensions, that are at most equal to half the free or effective opening of the bottom holes, into or through which it is to be inserted.

The pot may have any suitable and possibly commercially already available size, in non-limiting examples: a height of 11 cm and a top rim diameter of 12 cm; a height of 16 cm and a top rim diameter of 17 cm; or a height of 16,2 cm and a top rim diameter of 18,7 cm, etc. The size of the plant pots in fact does not really matter for the scope of the invention.

In fig. 16, a more detailed representation is shown of a system 200 for inserting a wick into a plant pot 201. The system comprises a storage and supply 202 containing an uncut length of wire, cable, fabric or other wick material 203, which is fed to a pair of grippers 204. Alternatively, a pre-cut length of wick can be provided for inserting into the pot 201. The right most gripper 205 engages the uncut wick material 203, whereas the left gripper 206 does not engage the uncut wick material, in the representation of fig. 16. The right gripper 205 then is moved to the right in fig. 17, in the direction of arrow H, pulling the uncut wick material 203 through the open left gripper 206.

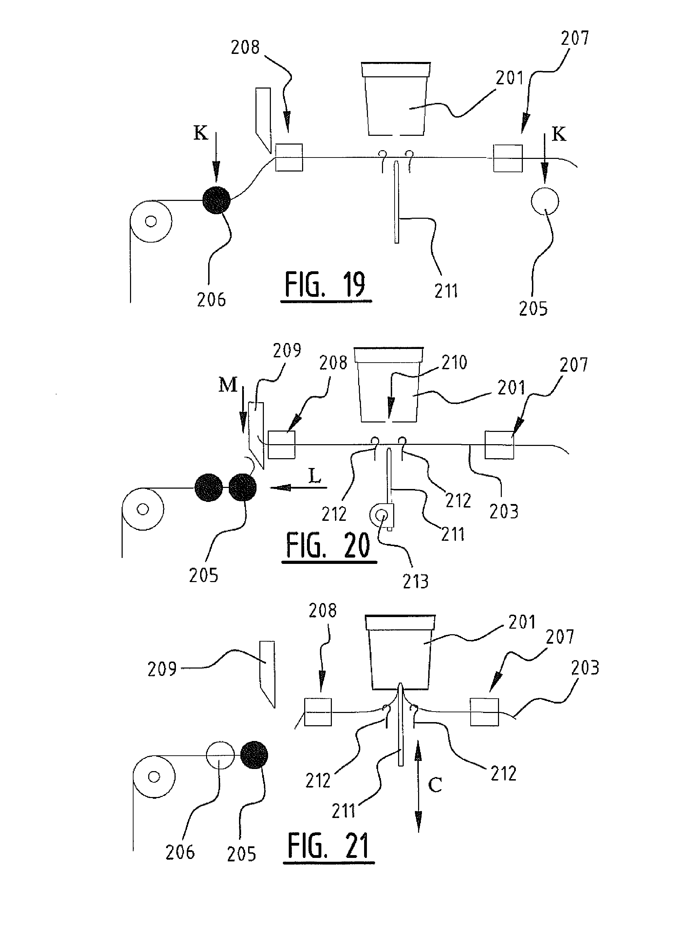

Thereafter, the left gripper 206 is driven to engage the uncut wick material 203, and the combination of the right gripper 205 and the left gripper 206, both engaging the uncut wick material 203, are moved in the direction of arrows I toward a pair of holders 207, 208, which can, just like the grippers 205, 206, be selectively activated to engage the uncut wick material 203. Moving from fig. 18 to fig. 19, the holders 207, 208 have been activated to engage the uncut wick material 203, where after the grippers 205, 206 can be moved back in the direction of arrows K, after the right gripper 205 has disengaged the uncut wick material 203. The left gripper 206 keeps engaging the wick material 203. Thereafter, moving from fig. 19 to fig. 20, the right gripper 205 is brought back to the vicinity of the left gripper 206 in the direction of arrow L and made to engage the uncut wick material 203. Thereafter, a knife 209 is brought down on the uncut wick material 203, which is tensioned between engaging left holder 208 and the right gripper 205 as a result a desired length of wick material 203 is made available for inserting thereof through hole 210 in plant pot 201, which predetermined length of wick material 203 is at that point of progress as shown in Fig. 20 still engaged by the right holder 207 and the left holder 208. The wick material may also be severed or cut using alternative means for the knife, such as a laser or heat source, a saw, scissors or a cutting clamp, and the like.

Hook shaped guides 212 are arranged on opposite sides relative to one another and the intermediate inserting lance 211, to guide the wick material 203 during an upward movement of the lance 211 when the drive 213 is activated or operated to move the lance 211 in the direction of arrow C (and back).

Once the determined and (pre-)cut length of wick material 203 is engaged by the tip of the inserting lance 211, the left holder 208 and the right holder 207 may disengage the cut length of wick material 203. Alternatively, the holders 207, 208 may keep their engagement on the cut length of wick material 203 during the inserting movement in the direction of arrow C of the inserting wick 211, as a consequence of which the holders 207, 208 must be arranged in a movable fashion to move towards and away from the inserting lance 211 in a horizontal direction in the representation of fig. 21. After the wick has been introduced sufficiently, the holders should disengage the cut length of the wick so as not to pull the wick out of the plant pot.

In the meantime, in fig. 21, the left gripper 206 will have disengaged the uncut wick material 203, so that after withdrawal of the inserting lance 211 from the plant pot 201, the starting configuration of fig. 16 is reestablished. Thereafter, a new plat pot 201 can be subjected to the operations of a system which schematically functions in accordance with the representation of figs. 16-21.

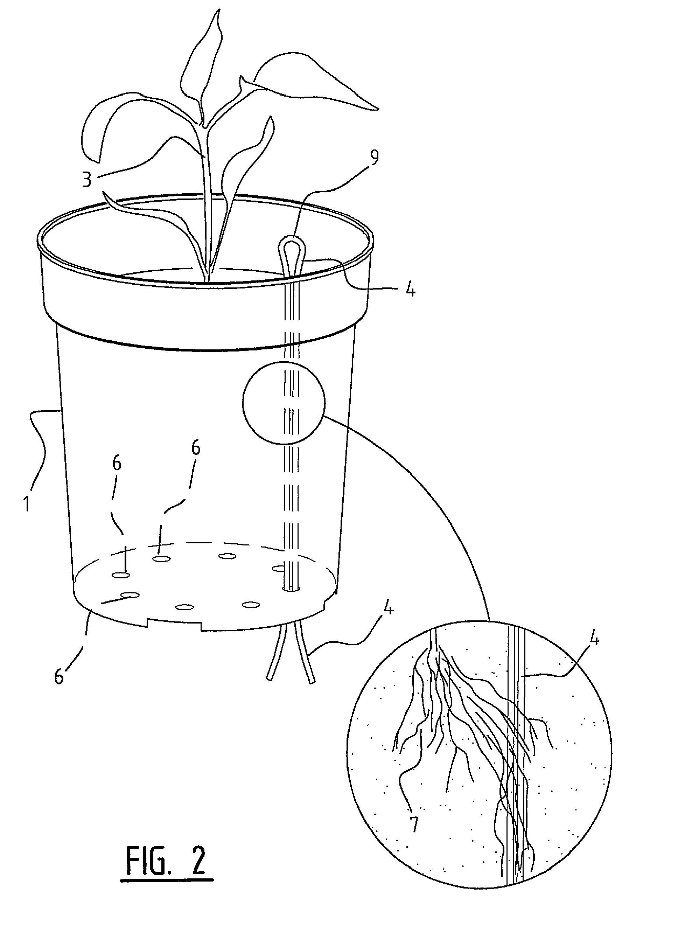

In fig. 2 an intermediate configuration is shown, which results from the actions in fig. 1 and described herein above.

As a consequence of the feature that the engaging head 8 of the inserting lance 5 engages the wick 4 about midway, after inserting the inserting lance 5 through the bottom hole 6 all the way up to above the top level of the soil 2 and retracting the inserting wick 5 again, a loop 9 in the wick 4 results. This loop 9 is shown in fig. 2, and entails that the wick 4 is folded double - back on itself.

Moreover, in the insert detail in fig. 2, the practical use of a wick 4 in a plant pot 1 is depicted. The wick 4 is designed for and intended to suck up fluid, such as water, into the soil in the plant pot 1. To this end, a supply of water can be provided underneath the plant pot, in a growing situation following arranging of the wick 4. It has been detected that growth of roots 7, as shown in the insert detail in fig. 2, is drawn towards the wick 4 and the supply of water, provided thereby. Consequently, providing additional wicks (as schematically shown in fig. 1) may be beneficial to obtain a more homogeneous distribution of roots 7 through the soil 2 in the plant pot 1. However, as a contrary consideration, provision of water to the insides of the plant pot 1 should not be excessive for any specific species of plant. Some species of plants can be provided with practically unlimited amounts of water, whereas other plants can exhibit deterioration of the roots 7, for instance a rotting process, if an excess of water is furnished.

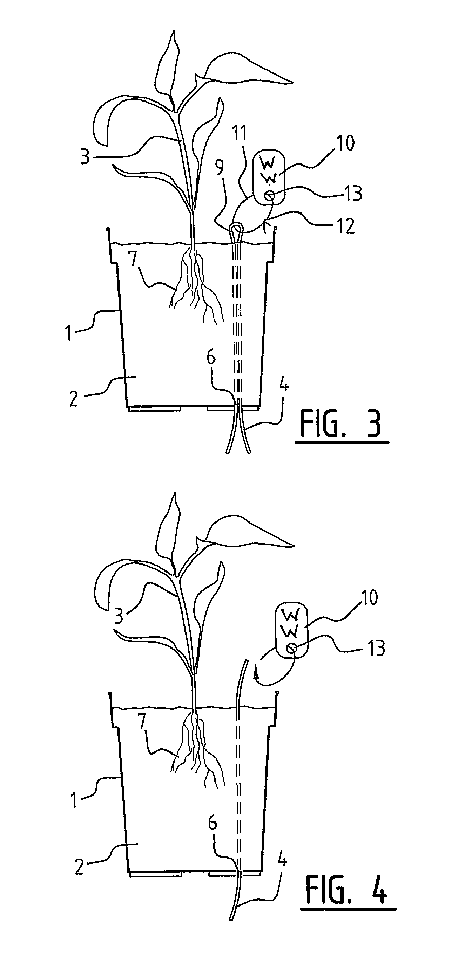

In fig. 3 a further feature according to the present invention is shown. The feature relates to a label 10 forming an anchor in the sense of specific embodiments of the present invention, which is arranged on or to the loop 9 in the wick 4. In fig. 3 the label 10 is connected to the loop 9, using a string 11, which may be tied into a knot 12. The string 11 may be arranged through the loop 9 and a hole 13 in the label 10. Alternatively, an incision can be arranged in the label from an outside edge thereof to extend through the hole 13. In such an alternate embodiment, the loop 9 of the wick 4 can be forced through the incision to arrange the loop 9 in the hole 13 to connect the label 10 to the wick 4. The label 10 carries an indication of the manufacturer, in the case that of the applicant, Waterwick BV.

In fig. 4 yet another alternate embodiment is shown, wherein a single strand of the wick 4 is inserted, for instance, though not exclusively, through the bottom hole 6 of the plant pot 1 to extend to a height above the top level of the soil 2 in the plant pot 1. The free end of the wick 4 may then be inserted through the hole 13 in the label 10 and doubled back upon itself in order to tie a knot or otherwise close a loop.

With a label, attached to a wick 4 in at least one of the above described manners or any alternative configuration, a double function can be achieved. Information about the plant 3 in the plant pot 1 can be furnished to an end user or consumer on the label 10. Simultaneously, since the label at least also extends in a direction across the slender wick, it may be prevented that the wick 4 in a doubled or singular configuration can sink through the soil 2. In this sense the label - or any alternative element - is referred to as an anchor. As a consequence the beneficial effects of such a wick 4, as depicted in the inserted detail in fig. 2, could be lost. Providing the label 10 to thus form an anchor and arranging the anchor forming label to or on the wick 4 can ensure continued beneficial effect of the wick and simultaneously present an end user or consumer with information about the plant.

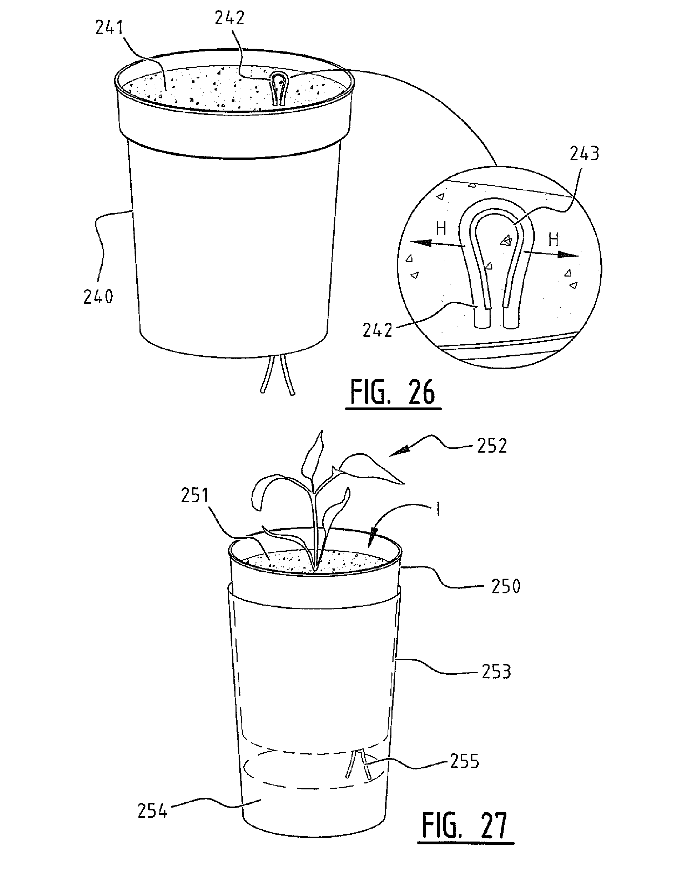

Fig. 26 shows a plant pot 240 with soil 241 or any other suitable substrate and a wick 242 inserted therein, for instance in the above described manner. The wick 242 forms a loop above the top level of the soil 241. To avoid the wick from sinking back down through the soil 241, an anchor forming stretching element 243 is provided. The stretching element exerts a spreading force in the direction of arrows P on the loop in the wick 242 (across the direction of the wick and the loop therein), to stretch the loop open and thus prevent the wick 242 from sinking down into the soil 241. Any similar and even non-stretching element may be employed in this manner, and may even for instance provide an attachment for a label. For instance the element 243 may be a locking medallion adapted to prevent the wick from sinking down into the soil 241 and provide a universal base for attaching differing labels thereto. Any element or component that is suitable or intended for keeping the wick 242 from sinking down into the soil 241 or other substrate in the plant pot, can and will be referred to as an anchor in the sense of the present invention.

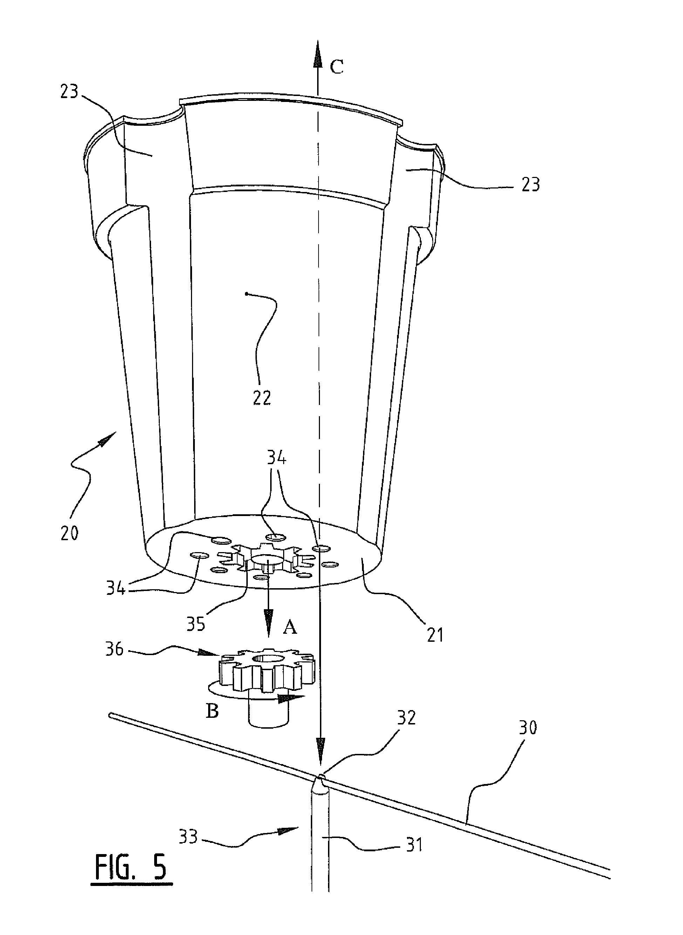

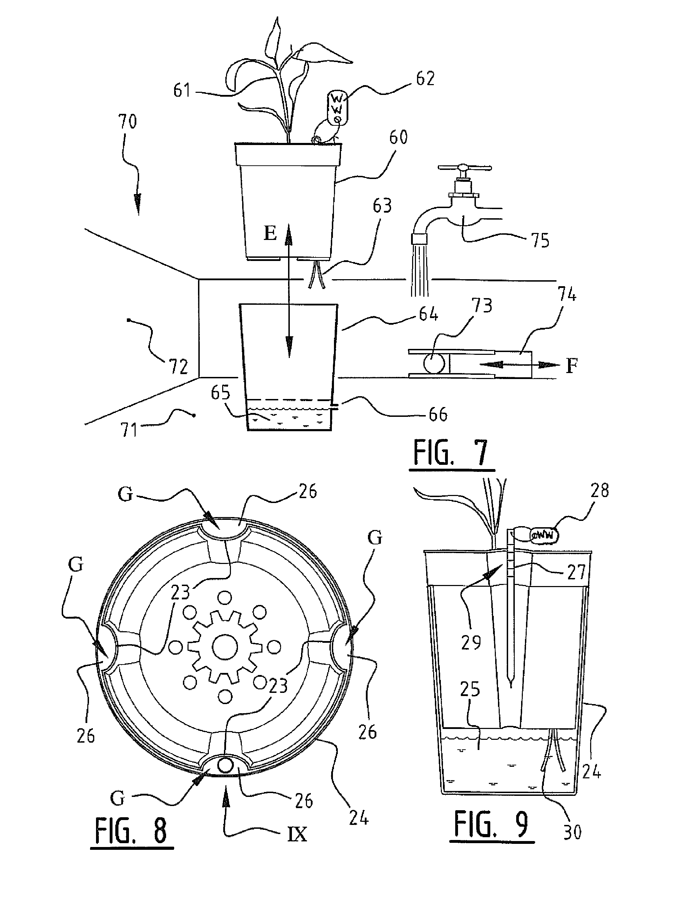

In fig. 5 a specific plant pot 20 is shown in an embodiment according to the present invention. The plant pot 20 has a bottom 21 and side walls 22. In a top view, such as for instance shown in fig. 8, the side walls 22 are essentially circular, but exhibit inward oriented indentations 23. Plant pot 20 is designed and intended to be arranged in a container, such as shown in for instance figs. 8 and 9. The container 24 can have the appearance, shape and form of essentially a plant pot itself. However, the container would in use normally serve the purpose of providing a water supply, as more specifically depicted in fig. 9. In the bottom of the container 24 a supply 25 of water is arranged. The water supply 25 in the container 24 can be supplemented via the channels 26 that are defined between the inner wall of the container 24 and the indentations 23 in the side walls 22 of the plant pot 20. Administering additional water for the water supply 25 can be achieved in the direction of arrows G in fig. 8.

Any one or more than one of the channels 26 can also accommodate a float or straw 27, of which at least a portion extends into the water supply 25, and which exhibits a desired degree of buoyancy. A straw may be closed at bottom end thereof to impart said desired degree of buoyancy to the straw. A label 28 can be attached to the fee end of the float or straw 27, on which label 28 information about the plant can be printed for the end user or consumer. Moreover, the height of the float or straw 27 at any given time is an indication of the water level of the water supply 25 in the container 24. Consequently, during growth, production, transport, offer for sale, or at the home of the end user or consumer, a clear indication can be obtained from the height of the float or straw 27 about the need for supplementing water into the water supply 25 in the container 24.

It is to be noted that specific indicators 29 can be printed or otherwise arranged on the float or straw 27 to furnish a more specific indication of an amount of water needed to bring the water supply 25 up to a desired level. The indicators 29 can be dependent on the type of plant in the plant pot 20. It is to be noted that also in the configuration according to fig. 9 a wick 30 is arranged in the plant pot 20, more in particular the wick 30 is arranged in the plant pot 20 before the plant pot 20 is accommodated in the container 24.

In fig. 5 additional or alternative features for arranging a wick 30 into plant pot 20 are shown, in relation to the description of fig. 1. Herein, the inserting lance 33 comprises a needle 31 having a U-shaped engaging head 32, which is U-shaped in side view. The wick 30 is to be accommodated in the U-shaped engaging head 32 prior to the needle 31 being driven through any one of the holes 34 in the bottom 21 of the plant pot 20. Again, the inserting lance 33 is driven up through a selected one of the holes 34 in the bottom 21 of the plant pot 20 and retracted after having extended up to at least the top level of the soil 2 in the plant pot 20. Thereafter, the inserting lance 33 is retracted, again following the movements indicated in fig. 5 with double arrow C.

According to the present invention aligning the inserted lance 33 with a selected one of the holes 34 is achieved in the following manner.

In the embodiment of fig. 5 the bottom 21 of the plant pot 20 comprises an essentially star-shaped recess 35, which is surrounded by the holes 34, through which the inserting lance 33 may be inserted. The shape of the star-shaped recess 35 corresponds with that of a toothed wheel 36. The toothed wheel 36 is arranged at a stationary height that is simultaneously arranged for rotation in the direction of arrow B (or an opposite direction). Plant pot 20 can be arranged in the direction of arrow A on top of toothed wheel 36, whereby the recess 35 may accommodated the toothed wheel 36. Consequently, the toothed wheel 36 can be driven in the direction of arrow B (or an opposite direction) such that a selected on of the holes 34 will be aligned with the movement in the direction of double arrow C of the inserting lance 33. Due to the correspondence of the shape of the recess 35 and that of the toothed wheel 36, rotation of the toothed wheel 36 will also result in rotation of the plant pot 20 to bring any one of the holes 34 into alignment with the inserting direction of arrow C of the inserting lance 33. Consequently, any one of the holes 34 may be a selected hole, if it can be aligned with the inserting lance 33 in the above described manner first.

The holes 34 in the bottom 21 of the plant pot 20 are arranged in a predetermined configuration relative to the shape and position of the recess 35. Consequently, in this embodiment, a plurality of rotational movements in the direction of arrow B can be executed to align any one of the holes 34 with the inserting lance 33. Thus the amount of rotation may be minimized to align an arbitrary one of the holes and the inserting lance, where the position of each hole is known beforehand through a predefined relation between the toothed wheel 36 and the recess 35 on the one hand and the positions of the holes 34 on the other hand. In the case of a regular shape of the toothed wheel 36 and recess, for instance, the holes may each be arranged between points of the star shape in fig. 5 and at a predefined distance from the centre of the bottom of the plant pot (or this may be the case for at least some of the holes). If this relationship is known, the position of each hole and alignment of any hole with the lance will be known to have been achieved at a reached rotational position of the wheel 36 and therewith the plant pot 20.

The shape of the recess 35 and that of the toothed wheel 36 can be arbitrarily chosen by the skilled person. Of importance in such a choice of shape is the ability to drive the plant pot 20 in a rotational movement in accordance with arrow B in fig. 5, and simultaneously define positions of the holes 34 in the bottom 21 of the plant pot 20 in order to achieve alignment of any one of these holes 34 with the inserting lance. For instance, the shape of the recess 35 and that of the wheel 36 could be oval, triangular, a pentagram, etc.

It is to be noted that the present embodiment according to fig. 5 requires some adaptation to the bottom 21 of the plant pot 20.

Some plant pots may have central recesses in the bottom thereof. Upright walls of such recesses may have slits, which can be engaged by a specific embodiment of a wheel that can be comparable with the toothed wheel 36 to engage the plant pot in the slits of the central recess rather than to provide a special star-shaped or other particular recess like the one 35 in fig. 5.

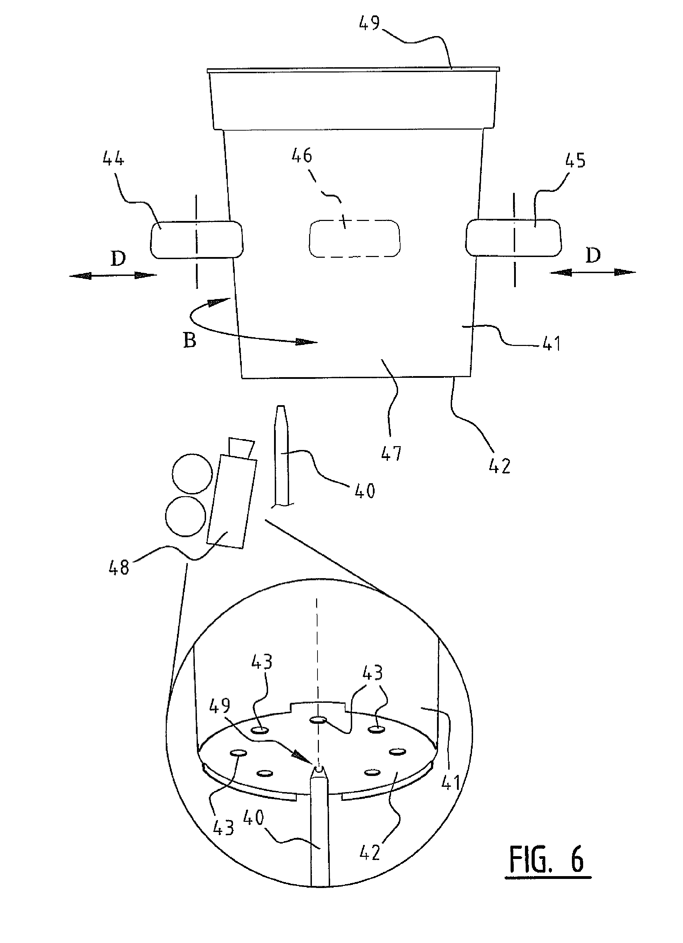

As yet another alternative embodiment, as shown in fig. 6, an inserting lance 40 can be aligned to holes 43 in a bottom 42 of a plant pot 41, even without a central recess. In the embodiment that is shown in fig. 6, running wheels 44, 45 and 46 are distributed around the circumference of the side wall 47 of the plant pot 41. After a plant pot 41 is provided, the running wheels 44, 45 and 46 can be made to abut against the outer service of the side walls 47 of the plant pot 41 by displacement of the running wheels 44, 45 and 46 in the direction of arrows D. By subsequently driving the running wheels 44, 45 and 46, which are evenly distributed around the circumference of the plant pot 41 in a rotational movement of each singular running wheel 44, 45 and 46, a rotation of the plant pot 41 in the direction of arrow B can be achieved. At such a rotational movement in the direction of arrow B of the plant pot 41, a camera 48 or any suitable imaging or vision means can be oriented at the bottom 42 of the plant pot 41, the two determine at which rotational position of the plant pot 41 the inserting lance 40 is aligned with any one and more in particular a selected one of the holes 43 in the bottom 42 of the plant pot 41. When such alignment is detected, the running wheels 44, 45 and 46 are arrested or halted to allow the inserting lance 40 to be inserted into and through the aligned one of the holes 43. With a wick (not shown in fig. 6) accommodated in the U-shaped engaging head 49, the (not shown) wick can be arranged through the aligned one of the holes 43 and into the soil in the plant pot 41 to achieve a result, much the same as the one shown in fig. 3. However, in this embodiment, no adaptation of the bottom 42 of the plant pot 41 is required.

It is to be noted here, that also other rotational drives can be employed that do not necessarily engage the outer surface of the side walls 47 of the plant pot 41, but may for instance engage the top rim 49 of the plant pot 41, or yet another alternative, wherein any one of the holes 43 may be engaged to drive the plant pot 41 in a rotational movement to align another one of the holes 43 in the bottom 42 of the plant pot 41.

In fig. 7 an embodiment of use of a plant pot 60 is depicted in a configuration, also according to the present application for growing the plants 61 in a controlled manner. Plant pot 60 is provided with a wick 63, to which a label 62 is arranged above the top surface of the soil in the plant pot 60. The plant 61 grows in that soil. The plant pot 60 can be accommodated in a container 64, containing a water supply 65. The wick 63 may serve to draw up water from the supply 65 into the soil in the plant pot 60, after the plant pot 60 is accommodated in the container 64 in the direction of double arrow E, after which a rim 67 of the plant pot 60 rests on the top circumferential edge of the container 64 to keep the bottom of the plant pot 60 above the normal level (depicted in fig. 7) of the water supply 65. The plant pot 60 may also be extracted from the container 64, for which reason the arrow E is double.

The container 64 comprises an overflow 66, defining a free passage for entry and/or outflow of water into and out of the container 64. The overflow 66 is arranged at a height in the side wall of the container 64 below the bottom of a plant pot 60 accommodated in the container 64. Thus the bottom of the plant pot 60 is above the level of the water supply 65 inside the container 64. Thus the remaining height of the container 64 above the overflow 66 corresponds with the height of the plat pot 60, in that the remaining height of the container 64 exceeds the height of the plant pot 60. Further the overflow is at such a height, that the water supply 65 in the container 64 suffices for an intended purpose, such as to sustain growth of a plant in the plant pot 60 via the wick 63 for a predetermined period of time during development of the plant or for instance to prevent the plant from withering during transport or display for sale. The overflow 66 may be closed using a plug or the like, for instance during transport, to ensure the availability of the water supply 65 for the plant. The assembly of the container 64 and the plant pot 60 would then be transported together in an assembled state thereof.

The container 64 is, in the embodiment of Fig. 7, arranged in a tray 70 comprising a bottom 71 and side walls 72. In one of these side walls 72 an outflow 73 is provided, which in a simple embodiment can entail no more than a simple hole. The outflow 73 can be closed, using a shift plate 74 or any suitable means. The shift plate 74 is movable in the direction of double arrow F to either close the outflow 73 or allow free passage of water from the tray 70. Further, the tray 70 is combined with a water tap 75 to add water into the tray 70. Using the water tap 75, the water level in the tray 70 can be increased to above the overflow 66, and consequently also within the container 64 via the overflow 66. The soil in the plant pot 60 can thereby be fully saturated. Thereafter, the water tap 75 can be closed and the shift plate 74, forming a type of valve, can be opened to free the outflow 73 and lower the level of water in the tray 70. At such a time, also the water level within the container 64 will lower, after which water supply to the soil in the plant pot 60 will be achieved mainly using the wick 63. This increasing and lowering of a water level within the tray 70 is schematically represented, that is generally referred to as an ebb and flood system, which has proven useful and reliable for regulating humidity of the soil in plant pots, although this is not previously been achieved using a combination thereof with a wick 63 and/or with a container like the container 64 in fig. 7.

Fig. 27 shows an alternative with a conventional pot 250 without the indentations 23 of the pot in Fig. 8 but with a wick 255 and an overpot 253 without an overflow in stead of the container 24 of fig. 8. In this alternative of fig. 27, the pot 250 contains soil 251 for a plant 252, to which water may be supplied in the direction of arrow Q. Since there are no indentations 23, no channels are available to supply water to lower parts of the overpot 253. Water then trickles down through the pot 250 and is caught in overpot 253 to form a reservoir at the bottom thereof. At the bottom of the pot 250, a wick 255 extends into water 254 in the bottom of overpot 253, to suck or draw up water for the plant 252. The plant 252 may be transported in the plant pot 250 and in the overpot 253, but intended and envisaged use is for the plant in the pot 250 to be taken out of the overpot 253 for transport, as a consequence of which the overpot stays at the grower.

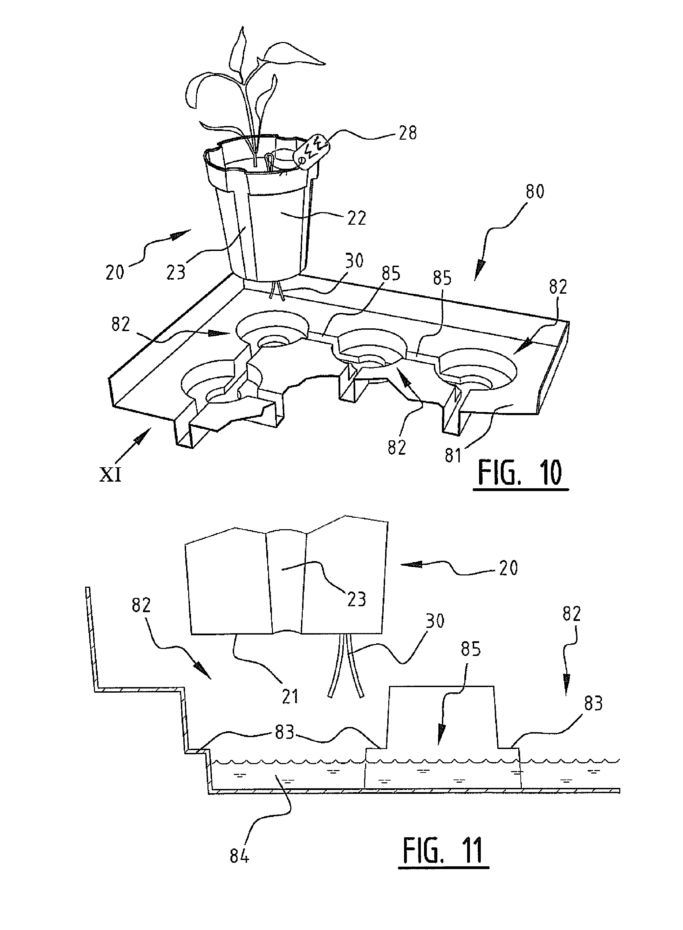

In fig. 10 and fig. 11 a tray 80 is shown in combination with a plant pot 20, which for the sake of the exemplarily embodiment here is the same plant pot as the one depicted in figs. 5, 8 and 9. Tray 80 has an articulated bottom, having recesses 82, which has a shape and form to accommodate the bottom 21 of a plant pot 20 in a preferably close fitting manner. Each recess 82, as shown in fig. 11, comprises a shoulder 83, which acts as a support for the plant pot 20, when the bottom 21 of the plant pot 20 is inserted into an intended one of the recesses 82.

The shoulder 83 surrounds a further depression 84, which acts as a reservoir for water when the plant pot 20 is accommodated in the recess 82, where the wick 30 will extend into this further depression 84 to draw up water from the reservoir formed by the further depression 84.

Between neighbouring recesses 82 and further depressions 84 in the articulated bottom 81 of the tray 80 channels 85 are defined. The channels 85 allow for distribution of water over the recesses 82 and further depressions 84, to which end the channels have a depth corresponding with the lowermost portions of the further depressions 84, so that water is distributed over de further depressions 84, even when plant pots 20 are accommodated in the recesses 82. It is to be noted that the indentations 23 in the side walls 22 of the plant pot 20 in a proper orientation of the plant pot 20 in the recess 82 of the tray 80 allow water to be supplemented into the reservoir formed by the further depression 84.

Consequently, water can be administered to the plants directly, using specifically watering means or by simply spraying or sprinkling water into the tray 8. For such wide spread watering, a watering boom (not shown) can be employed, whereby a considerable simplification for watering plants can be achieved in this embodiment.

The tray 80 of figure 10 or figure 11 can be used for growing plants or maybe even for transporting plants in the plant pots 20. Such trays 80 may even be used for display purposes.

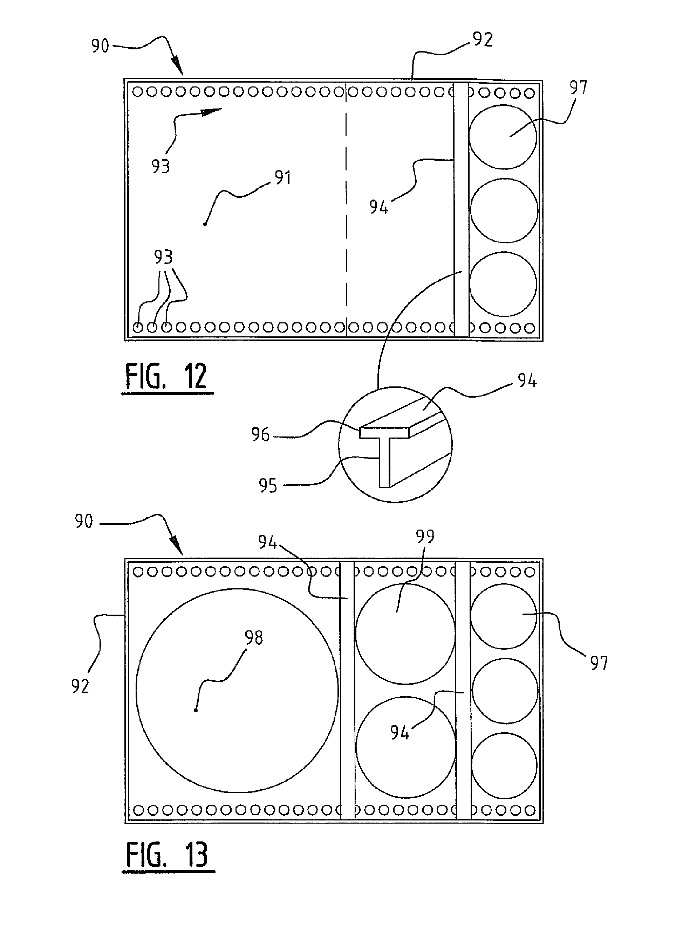

Likewise, fig. 12 and fig. 13 show a further example of a tray 90 having a bottom 91 and upright wall parts 92, surrounding the bottom 91. The bottom 91 of the tray 90 is provided with protrusions 93 in two rows along the longer sides of the tray 90. The protrusions define an intermediate space, into which a separator beam 94 can be inserted. The separator beam 94 is an A-profile, as shown in the insert detail of fig. 12. The upright profile part 95 of the T-shaped separator beam 94 can be inserted into the space defined between two neighbouring protrusions 93, while simultaneously the crossbar profile part 96 of the separator beam 94 defines an intermediate space between neighbouring plant pots on opposite sides of the separator beam 94. As shown in fig. 13, a relatively large plant pot 98 can stably be arranged between a side wall 92 of the tray and a separator beam 94, inserted therein, whilst smaller pots 99 can be safely and stably arranged between neighbouring separator beams 94. Even relatively small plant pots 97 can be stabile transported and even displayed at a point of sale, accommodated between a side wall 92 of the tray 90 and an inserted separator beam 94.

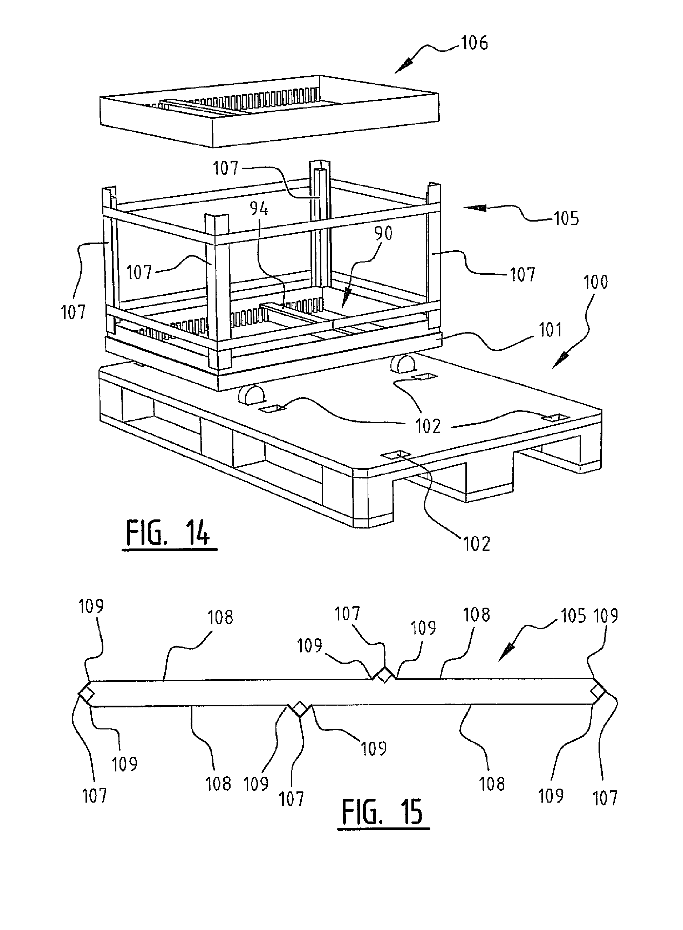

In order to emphasize the usability of separable types of trays in combination with plant pots for growing plants, transporting the plant pots and offering the plants for sale in the form of a display, figs. 14 and 15 show that a wheeled base 101 can be arranged on top of a pallet 100, more in particular with the wheels of the wheeled based 101 sunk into holes 102 in the tops the holes 102 can be arranged all through the top surface of the pallet 100, but slight depressions may also serve the purpose of immobilizing the wheeled base 101 on top of the pallet 100.

The wheeled base 101 forms a support for a tray, for instance the tray of figs. 12 and 13. Such a tray 90 may be embodied from sturdy plastic, which is sufficiently strong to carry a collapsible frame 105 on the corners thereof. The collapsible frame 105 is shown in fig. 15 in a collapsible state. The collapsible frame 105 comprises four uprights 107, which correspond in position and orientation with the corners of the tray 90, to be arranged thereon. The uprights 107 are mutually connected by bans or strips 108. To achieve the collapsed situation of fig. 15 in an embodiment where strips 108 are employed to connect uprights 107, hinges 109 should be arranged between the uprights 107 and the strips 108. As an alternative for the hinges 109, connecting elements of flexible material can also be employed or any other suitable alternative.

With the collapsible frame in an expanded configuration as shown in fig. 14, the collapsible frame 105 forms a support for a further or additional tray 106 which can essentially be a tray as the one on the wheeled base 101 or at least of the same type.

The length of the uprights of the collapsible frame 105 may be selected in accordance with the expected height of plants to be transported in plant pots to be arranged on the bottom of the trays 90, 106. A further collapsible frame 105 can be added on top of the further tray 106, to continue stacking trays and increasing the height of the thus created assembly.

It is to be noted that plants can be grown in pots, arranged in trays 106, to be stacked using collapsible frames 105 (or similar devices) for transport. After reaching a destination or point of sale, an assembly comprising a wheeled base 101 and the stack of trays 90, 106 and intermediate collapsible frames 105 can be taken off the pallet 100 to be driven to a display position. Consequently, end users or consumers can take plants in plant pots out of the trays 90, 106 to the checkout counter for payment thereof. Such a display using grow trays 90, 106 can then be returned to a grower to be re-used. For this purpose, the frames 105 are preferably collapsible or can at least, to some degree, be disassembled to save transport space during a return journey.

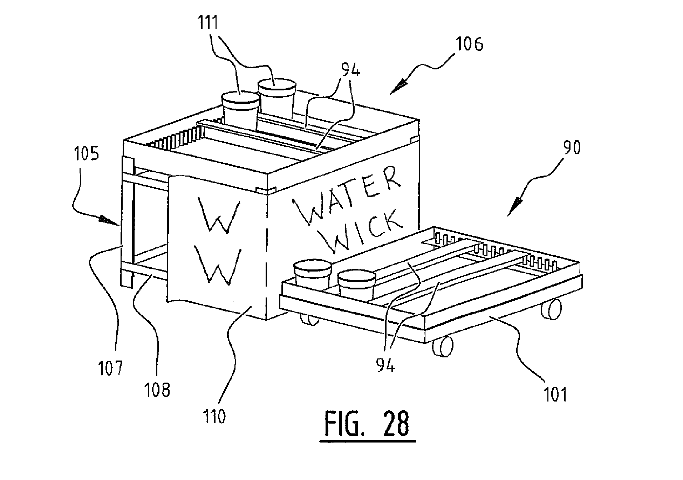

In fig. 28, the assembly in fig. 14 in use to display plants on offer for sale is shown. Plant pots 111 are arranged in trays 90, 106, and held upright in a sturdy manner, for instance using the separator beams in fig. 14. The collapsible frame 105 with the higher tray 106 thereon has been taken off the lower tray 109, and been set down on a ground besides the wheeled base 101 carrying the lower tray 90. A banner 110 is then wrapped around and arranged on the collapsible frame 105 (for instance using valcro connections or the like) to enhance the attractive appeal of the thus formed configuration. The banner 110 may be printed with plant information, grower information, a picture of the plants on offer for sale, a solid colour or the like. In the example of fig./ 28, an identification of the manufacturer is shown, in particular the name of the present applicant, Waterwick BV. Although no plants are shown in fig. 28, the plant pots 111 will contain plants in practice.

In fig.'s 22, 23 and 24 a display and transport device 220 is shown, comprising a preferably collapsible frame 221 and a plurality of trough-like supports 222, 224 for accommodating plant pots 223. On the frame 221, trough-like supports of different dimensions can be arranged. For instance, the higher trough-like support 222 can be relatively small, especially in relation to the lower arranged trough-like support 224, where the higher support 222 is intended for smaller plant pots 223 and consequently also smaller plants, than the bigger, wider and deeper trough-like support 224, which is lower down on the frame 221.

At a point of sale, water 225 can be added to the support 222 or 224, to accommodate a plant pot 223 with the bottom thereof submerged, or at least a wick extending from the bottom of the plant pot 223 into the water 225.

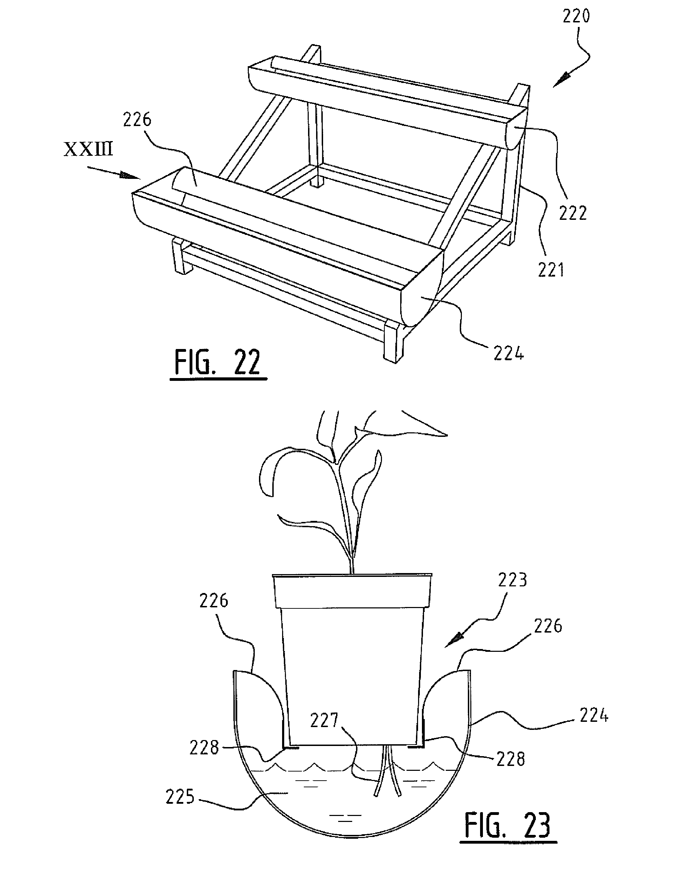

The supports 222, 224 are provided with resilient flaps along the edges thereof, which resiliently press against a plant pot 223, when inserted into or on the supports 222, 224. The resilient forces exerted by these flaps 226 serve to keep the plant pot 223 in fig. 23 upright. In fig. 23, at the free ends of the resilient flaps 226 angled carrier elements 228 are provided to support plant pots 223 above the level of water 225.

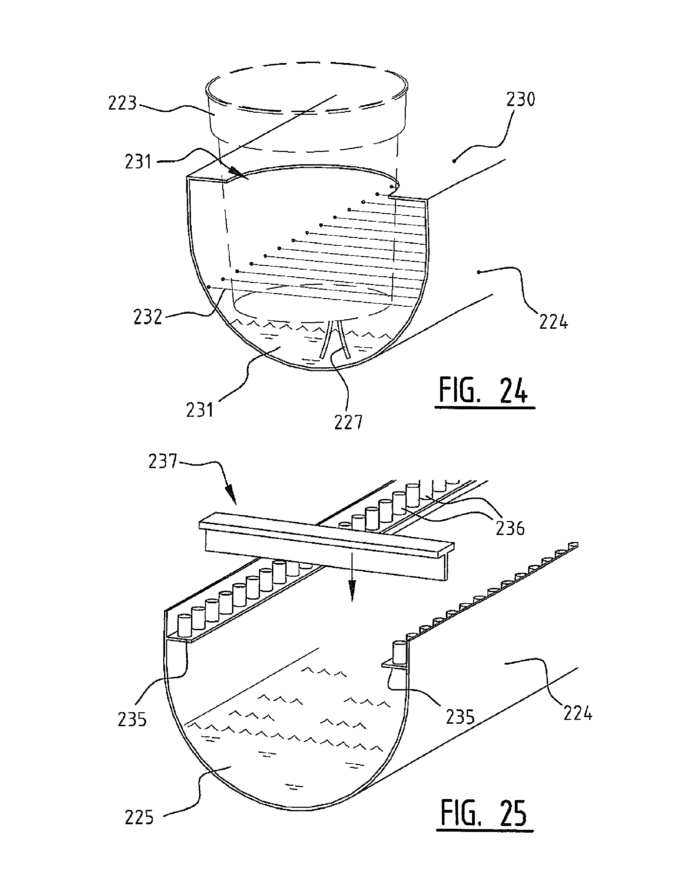

The resilient flaps 226 may be replaced by configurations that could resemble cup holders or the like, to insert the bottom of plant pots 223 therein to submerge only the wick 227 extending from the bottom of the plant pots 223 in the water 225, or to at least allow the wick 227 to be in contact with the water 225. In fig. 24 a cover 230 is arranged over the trough like support 224, where holes 231 are arranged in the cover 230. Additionally or alternatively, the trough like support 224 as shown in fig. 24 may comprise a grating 232 or the like to support above the top level of the water 225 the bottoms of plant pots 223 arranged therein. In fig. 25, and embodiment is shown exhibiting similar features as a tray in fig.'s 12 and 13, where the trough like support 224 comprises shoulders 235 carrying protrusions 236, between which T-shaped profiles 237 can be inserted to define there between a predetermined distance corresponding with plant pot sizes, to support plant pots of differing or varying sizes adjustably, in particular under a rim thereof.

Many other alternative configurations may also turn out to be fruitful or effective, which should all be considered within the realm of possibilities, that would immediately spring to mind to the skilled person, after having been confronted with the foregoing description and accompanying drawings.

Many other additional and alternative embodiments would also practically force themselves upon the skilled person, where the alternative or additional embodiments are all within the scope of protection of the present invention according to the wording or spirit of the accompanying claims, and are in this sense to be considered embodiments of the present invention.

## Claims

1. A plant pot, comprising:
- a bottom and at least one side wall, extending from the bottom up to a top rim, made from plastic, for instance in an injection of blow moulding process, and
- an integrated coupling part designed and adapted to be engaged for rotation of the plant pot and oriented in a system for processing the plant pot.

2. The plant pot as claimed in claim 1, further comprising: at least one hole, which is preferably pre-arranged in or at least near the bottom for a wick to be inserted there through into the plant pot to extend from below the bottom and through the hole.

3. The plant pot as claimed in claim 1 or 2, wherein the coupling part comprises a recess in the bottom of the plant pot.

4. The plant pot as claimed in any one or more than one of the preceding claims, wherein the coupling part in frontal view has any one or more than one shape from the group at least comprising: a star; an oval; a triangle; a pentagram; or the like.

5. The plant pot as claimed in at least claim 2, comprising a plurality of holes, wherein the holes are arranged in a predetermined configuration relative to the shape and position of the coupling part.

6. The plant pot as claimed in at least claim 2, wherein the wick is made from a material exhibiting a capillary action, such as a fibrous material, a woven or non-woven material, cotton, woven cotton rope, wool, acrylic string, hemp rope, synthetic shoe laces, chamois e.g. 100% rayon, braided polypropylene rope, polyester cord, nylon rope, etc.

7. A method for rotationally orienting a plant pot having a bottom and at least one side wall, extending from the bottom up to a top rim, and at least one coupling part at the bottom of the plant pot, the method comprising the steps of:
- engaging the coupling part using a rotatable drive, such as a wheel;
- rotating the drive and therewith also the plant pot to a rotational position corresponding with a processing step; and
- executing the processing step.

8. The method as claimed in claim 7, wherein the processing step is the application of a wick through a hole, which is pre-arranged in or at least near the bottom, the method comprising:
- providing a length of wick material longer than a height of the plant pot;
- rotating the plant pot using the drive to a rotational position wherein the hole is aligned with the wick;
- orienting the length of wick material towards the hole in the bottom of the plant pot; and
- inserting the length of wick material to extend from below the bottom and at least through the hole into the plant pot.

9. The method according to claim 8, further comprising inserting the wick through the hole at least essentially up to the top rim of the side wall.

10. The method as claimed in claim 7, 8 or 9, wherein the coupling part in frontal view and the rotatable drive have corresponding shapes.

11. The method as claimed in claim 10, wherein the shapes of the coupling part and the drive are each any one or more than one shape from the group at least comprising: a star; an oval; a triangle; a pentagram; or the like.

12. The method as claimed in any one or more than one of the preceding claims 7 - 11, wherein holes are arranged at a plurality of predefined positions relative to the coupling part to enable the processing step based on a selected one of the plurality of holes to reduce an amount of rotation needed prior to executing the processing step.

13. A system for rotationally orienting a plant pot having a bottom and at least one side wall, extending from the bottom up to a top rim, and at least one coupling part at the bottom of the plant pot, the system comprising:
- a rotatable drive, such as a wheel, to engage the coupling part, wherein by rotation of the drive the plant pot is oriented to a rotational position corresponding with a processing step; and
- at least an actuator to execute the processing step.

14. The system as claimed in claim 13, wherein the processing step is the application of a wick through a hole, which is pre-arranged in or at least near the bottom, the system comprising:
- an inserting lance connected to the actuator to selectively insert a length of wick material into the plant pot through the hole, after rotation of the plant pot to a rotational position wherein the hole is aligned with the inserting lance carrying the wick.

15. The system according to claim 14, wherein the inserting lance is longer than a height of the plant pot to insert the wick through the hole at least essentially up to the top rim of the side wall.

16. The method as claimed in claim 7, 8 or 9, wherein the rotatable drive has at least one or more than one shape from the group at least comprising: a star; an oval; a triangle; a pentagram; or the like.
